# EUROPEAN PATENT SPECIFICATION

(11) **EP 3 549 653 B1**
(45) Date of publication and mention of the grant of the patent: **12.05.2021**
(21) Application number: 18796819.3
(22) Date of filing: 26.09.2018
(51) Int. Cl.: B01D 36/00, C02F 9/02, C02F 1/00, B01D 27/14, B01D 29/15, B01D 29/33, B01D 29/58, C02F 1/28, C02F 1/44

(54) **WATER PURIFICATION SYSTEM WITH COMPOSITE FILTER ELEMENT ASSEMBLY**
WASSERREINIGUNGSSYSTEM MIT ZUSAMMENGESETZTER FILTERELEMENTANORDNUNG
SYSTÈME DE PURIFICATION D'EAU AVEC UN ENSEMBLE ÉLÉMENT FILTRANT COMPOSITE

(30) Priority: 30.10.2017 CN 201721432072 U; 30.10.2017 CN 201721430486 U
(43) Date of publication of application: 09.10.2019
(73) Proprietor: Foshan Shunde Midea Water Dispenser MFG. Co., Ltd, Foshan, Guangdong 528311 (CN); Midea Group Co., Ltd., Foshan, Guangdong 528311 (CN)
(72) Inventor: ZHANG, Xingzhi, Foshan Guangdong 528311 (CN); CAI, Xuegang, Foshan Guangdong 528311 (CN)
(74) Representative: Lam, Alvin
(86) International application number: PCT/CN2018/107583
(87) International publication number: WO 2019/085695

(56) References cited:
- EP-A1- 3 034 470
- CN-A- 104 524 861
- CN-U- 205 528 054
- CN-U- 206 463 790
- CN-U- 206 562 313
- CN-U- 207 401 250
- CN-U- 207 401 362
- CN-U- 207 498 155
- KR-A- 20050 022 694
- US-A- 4 992 170

## Description

### FIELD

The present disclosure relates to the technology field of water purifier, and more particularly to a composite filter assembly and a water purifier.

### BACKGROUND

It is well known that a water purifier commonly filters water by multiple filters (normally 4 to 5 filters) connected with each other in series. The filter assembly has a larger size. A kind of composite filter assembly has been provided in prior art, instead of connecting the filters together in series, the filters of the composite filter assembly are coupled together by sleeving one filter by another, so as to reduce the size of the filter assembly, and miniaturize the water purifier.

In practice, as different filters have different pressure resistance abilities, in order to ensure that the filters are all in an appropriate pressure ranges, a booster pump is needed to be defined in the flow channel to adjust the pressures to be suitable for each filter. Corresponding to the booster pump, a connector is also needed to be defined to filter housing. For simplicity, in the prior art, two connectors of the water purifier, which are configured to connect with the booster pump, are separately located at the filter housing up and down. When the booster pump is connected to the two connectors, an additional connecting pipe is needed for auxiliary assembly, which increases the complexity of the assembly, and reduces the assembly efficiency.

EP3034470A1 relates to an integrated composite filter and a water purification system having the same are provided. The integrated composite filter includes: a shell defining a chamber therein, and defining a raw water inlet, a pretreated water outlet, a pretreated water inlet, a pure water outlet and a waste water outlet which are in communication with the chamber respectively; a pretreating filtering element disposed within the chamber; a filtering membrane disposed within the chamber. The pretreating filtering element and the filtering membrane are sequentially positioned between the raw water inlet and the pure water outlet as well as the waste water outlet, and the pretreating filtering element is positioned between the raw water inlet and the pretreated water outlet, and the filtering membrane is positioned between the pretreated water inlet and the pure water outlet as well as the waste water outlet.

CN206562313U relates to water purifying system, include: composite filter element subassembly, booster pump, wastewater electromagnetic valve and water storage device. The composite filter assembly comprises a pre-filter, a membrane filter and a post-filter located on the top of the membrane filter. Water is filtered radially inwards through the pre-filter, followed by the membrane filter and finally flowing upwards to the post-filter. It is mainly concerned with the connection between the main housing including membrane filter and the post-filter, whereby the connection is realized with two threaded end caps.

US4992170A relates to a three element reverse osmosis filter cartridge assembly having a pre-filter section for solid particles, a reverse osmosis membrane filter section which produces product water and waste water from feed water circulated thereto via the pre-filter section, and a post-filter section for filtering the product water. These sections are disposed in coaxial, concentric relationship. The pre-filter section forms a replaceable outside sheath which is slideable onto and off the membrane section. The post-filter section is a tubular body containing carbon or other particles which is removably disposed in a central opening inside the membrane section. The membrane section has a support ring defining one end of the cartridge assembly which is disposed in sealing relationship with a ring which holds filter media layers of the pre-filter section. The pre-filter section has another ring at the end thereof opposite to said first ring and defines the opposite end of said pre-filter section. The cartridge assembly is replaceably disposed in a tubular housing having an end plate at one end thereof and a removable end cap at the opposite end thereof. The end plate has openings or ports for communicating feed water into said pre-filter section and for the out feed of waste water and product water from said membrane section and post-filter section, respectively.

### SUMMARY

The present disclosure is to provide a composite filter assembly, which aims to solve the problem of that the design of the connector for connecting the water purifier and the booster pump is unreasonable, and the process of assembly is complicated.

In order to achieve the above aim, the present disclosure provides a water purification system comprising a composite filter assembly as set out in claim 1 which comprises the essential features of the invention. Further preferred embodiments are described in dependent claims 2-9.

In the technical proposal of the present disclosure, the pre-posed filter, the membrane filter, and the post-posed filter are integrated into a composite filter, as such the complete appliance is miniaturized, the number of the connectors and the risk of leakage are reduced. And, the initial filtered water outlet connected with the booster pump is configured to surround the pressurized water inlet, therefore the booster pump can be directly connected with the initial filtered water outlet and the pressurized water inlet after passing through a connector, as such there is no need to introduce a connecting pipe, etc. The mounting of the complete appliance is simplified, the mounting efficiency of the composite filter assembly and the water purifier is improved.

The present disclosure also provides a water purification system, which includes a booster pump and a composite filter assembly, the composite filter assembly defines a housing, and a composite filter defined in the housing, the housing includes a raw water inlet, an initial filtered water outlet, a pressurized water inlet, a pure water outlet, and a waste water outlet, the composite filter includes a pre-posed filter, a membrane filter, and a post-posed filter,the pre-posed filter and the membrane filter are defined in a manner from outside to inside, and spaced from each other, the post-posed filter is connected with the membrane filter and located at a downstream position of the membrane filter;
the initial filtered water outlet is communicated with an outlet end of the pre-posed filter, the pressurized water inlet is communicated with an inlet end of the membrane filter;
the outlet end of the pre-posed filter is adjacent to the inlet end of the membrane filter, the initial filtered water outlet is an annular opening which surrounds the pressurized water inlet; and
one end of the booster pump is connected with the initial filtered water outlet, the other end of the booster pump is connected with the pressurized water inlet.

The present disclosure also provides a composite filter assembly, applied to a water purification system, wherein, the composite filter assembly defines a housing, and a composite filter defined in the housing, the housing includes a raw water inlet, an initial filtered water outlet, a pressurized water inlet, a water storage port, a pure water outlet, and a waste water outlet, the composite filter includes a pre-posed filter, a membrane filter, and a post-posed filter, the pre-posed filter and the membrane filter are defined in a manner from outside to inside, and spaced from each other, the post-posed filter is connected with the membrane filter and located at a downstream position of the membrane filter;
the initial filtered water outlet is communicated with an outlet end of the pre-posed filter, the pressurized water inlet is communicated with an inlet end of the membrane filter, the water storage port is communicated with an outlet end of the membrane filter and inlet end of the post-posed filter; and
the outlet end of the pre-posed filter is adjacent to the inlet end of the membrane filter, the initial filtered water outlet is an annular opening which surrounds the pressurized water inlet.

Selectively, the post-posed filter is located upon the pre-posed filter and the membrane filter; and
the initial filtered water outlet and the pressurized water inlet are both defined at a lower end surface of the housing.

Selectively, the pressurized water inlet is circular-shaped, and located at a center position of the lower end surface of the housing, the initial filtered water outlet and the pressurized water inlet are concentric.

Selectively, a radius of the pressurized water inlet is 10mm to 20mm, a radius of a circle defined by the outer peripheral edge of the initial filtered water outlet is 25mm to 35mm.

Selectively, the housing includes an outer housing, and an inner housing received in the outer housing, the pre-posed filter is defined between the inner surface of the outer housing and the outer surface of the inner housing, the membrane filter is received in the inner housing, the post-posed filter is defined at an up end of the inner housing;
a lower end surface of the outer housing defines a first opening, the periphery of the first opening extends downwards to form a first annular rib; a lower end surface of the inner housing defines a second opening, a projection of the second opening along an up-down direction is located in the first opening, the periphery of the second opening extends downwards to form a second annular rib, the second annular rib extends into the first annular rib; and
an inner circumference surface of the first annular rib and an outer circumferential surface of the second annular rib cooperatively form the initial filtered water outlet, the inner circumference surface of the second annular rib defines the pressurized water inlet.

Selectively, an outer circumferential surface of the first annular rib and the outer circumferential surface of the second annular rib both define a sealing structure, the sealing structure is configured as an adaptor which is tightly connected to a booster pump of the water purification system.

Selectively, the sealing structures include one sealing annular groove defined at the outer circumferential surface of the first annular rib and one sealing element defined in the sealing annular groove, and another sealing annular groove located at the outer circumferential surface of the second annular rib and another sealing element defined in the another sealing annular groove.

Selectively, a connector configured to connect with an external structure is defined at a top end of the outer housing, a raw water connector, a water storage connector, a pure water connector, and a waste water connector are all defined on the connector in a parallel manner, the raw water connector communicates with the raw water inlet, the water storage connector communicates with the water storage port, the pure water connector communicates with the pure water outlet, the waste water connector communicates with the waste water outlet.

Selectively, the membrane filter includes a central collecting pipe, and a membrane filter body coiled around the central collecting pipe, the pressurized water inlet is communicated with an inlet end of the membrane filter body, a wall of the central collecting pipe defines a plurality of communicating ports which communicate with an outlet end of the membrane filter body, a top end of the central collecting pipe is communicated with and the water storage port and the inlet end of the post-posed filter.

Selectively, the composite filter assembly further includes a hollowed connecting housing, at least a portion of the connecting housing is defined in a top end of the inner housing, and the top end of the central collecting pipe is communicated with an inner cavity of the connecting housing; and
an outer surface of the connecting housing and an inner surface of the inner housing cooperatively define a waste water flow channel for leading waste water from the membrane filter body to the waste water outlet; the post-posed filter is located in the connecting housing, the post-posed filter and an inner surface of the connecting housing cooperatively define a water storage flow channel for leading water from a top end of the central collecting pipe to the water storage port, an inner cavity of the post-posed filter defines a pure water flow channel for leading pure water to the pure water outlet.

In the technical proposal of the present disclosure, the pre-posed filter, the membrane filter, and the post-posed filter are integrated into a composite filter, as such the complete appliance is miniaturized, the number of the connectors and the risk of leakage are reduced. And, the initial filtered water outlet connected with the booster pump is configured to surround the pressurized water inlet, therefore the booster pump can be directly connected with the initial filtered water outlet and the pressurized water inlet after passing through a connector, as such there is no need to introduce a connecting pipe, etc. The mounting of the complete appliance is simplified, the mounting efficiency of the composite filter assembly and the water purifier is improved.

### BRIEF DESCRIPTION OF THE DRAWINGS

To better illustrate the technical solutions that are reflected in various embodiments according to this disclosure or that are found in the prior art, the accompanying drawings intended for the description of the embodiments herein or for the prior art will now be briefly described, it is evident that the accompanying drawings listed in the following description show merely some embodiments according to this disclosure, and that those having ordinary skill in the art will be able to obtain other drawings based on the arrangements shown in these drawings without making inventive efforts, where in these drawings.
FIG. 1 is a structure diagram of the composite filter assembly according to an exemplary embodiment of the present disclosure;
FIG. 2 is a front view of the composite filter assembly shown in FIG. 1;
FIG. 3 is an upward view of the composite filter assembly shown in FIG. 2;
FIG. 4 is a cross section view of the composite filter assembly shown in FIG. 2;
FIG. 5 is an exploded diagram of the portion A shown in FIG. 4;
FIG. 6 is an exploded diagram of the portion B shown in FIG. 4;
FIG. 7 is a structure diagram of the composite filter assembly according to another exemplary embodiment of the present disclosure;
FIG. 8 is a front view of the composite filter assembly shown in FIG. 7;
FIG. 9 is an upward view of the composite filter assembly shown in FIG. 8;
FIG. 10 is a cross section view of the composite filter assembly shown in FIG. 8;
FIG. 11 is an exploded diagram of the portion C shown in FIG. 10;
FIG. 12 is an exploded diagram of the portion D shown in FIG. 10.

The realization of the aim, functional characteristics, advantages of the present disclosure are further described specifically with reference to the accompanying drawings and embodiments.

### DETAILED DESCRIPTION

The technical solutions of the embodiments of the present disclosure will be clearly and completely described in the following with reference to the accompanying drawings. It is obvious that the embodiments to be described are only a part rather than all of the embodiments of the present disclosure. All other embodiments obtained by persons skilled in the art based on the embodiments of the present disclosure without creative efforts shall fall within the protection scope of the present disclosure.

It is to be understood that, all the directional instructions in the present disclosure (such as top, down, left, right, front, back......) can only be used for explaining relative position relations, moving condition of the elements under a special form (referring to figures), and so on, if the special form changes, the directional instructions changes accordingly.

The present disclosure provides a composite filter assembly, which is applied to a water purification system.

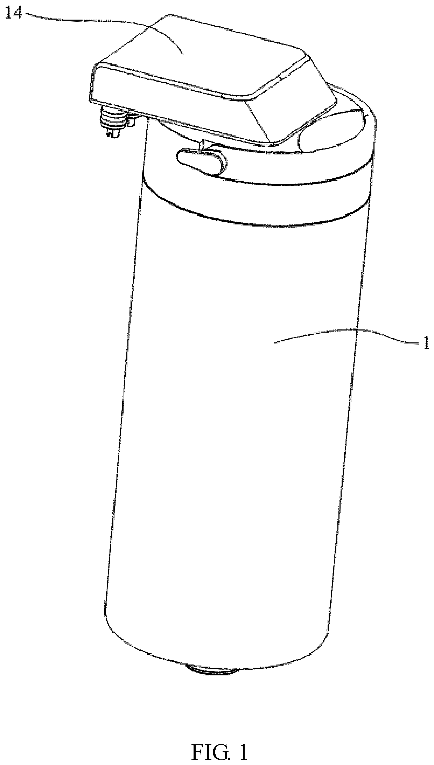

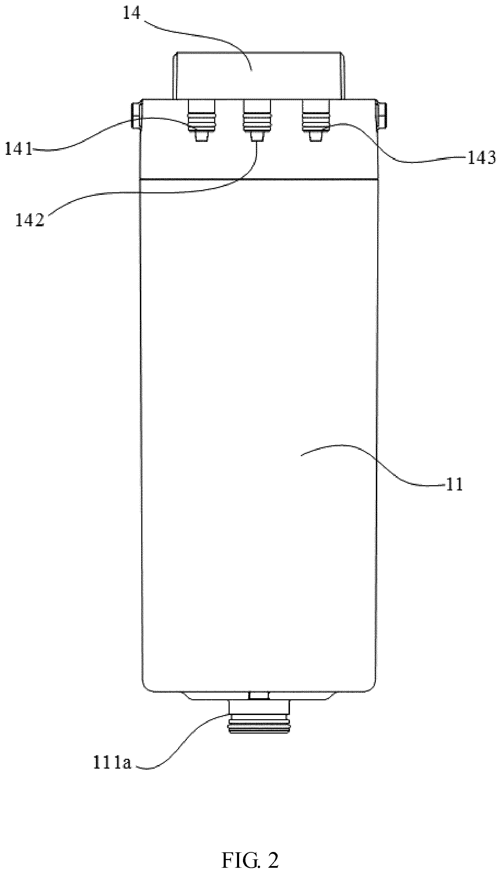

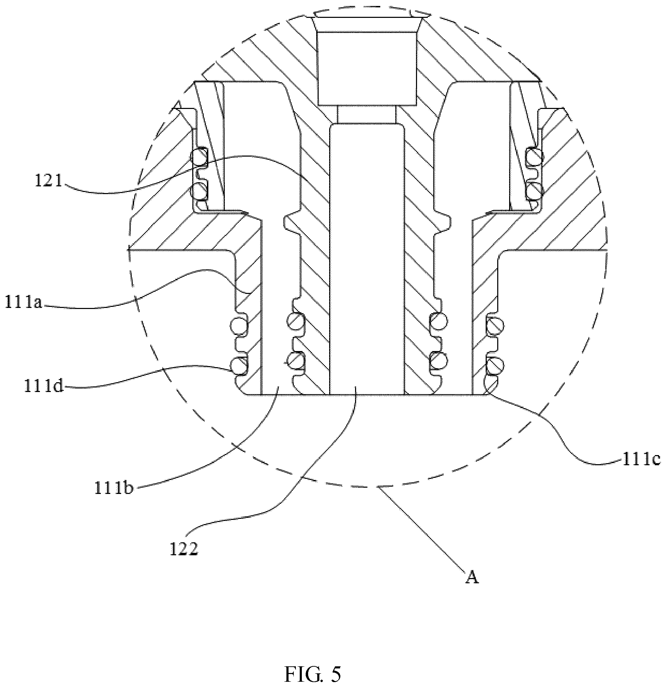

In an exemplary embodiment of the present disclosure, referring to FIGS. 1-5, the composite filter assembly includes a housing 1, and a composite filter defined in the housing 1, the housing 1 defines a raw water inlet (not shown), an initial filtered water outlet 111b, a pressurized water inlet 122, a pure water outlet (not shown), and a waste water outlet (not shown), the composite filter includes a pre-posed filter 2, a membrane filter 3, and a post-posed filter 4, the pre-posed filter 2 and the membrane filter 3 are defined in a manner from outside to inside, and spaced from each other, the post-posed filter 4 is connected with the membrane filter 3 and located at a downstream position of the membrane filter 3;
the initial filtered water outlet 111b is communicated with an outlet end of the pre-posed filter 2, the pressurized water inlet 122 is communicated with an inlet end of the membrane filter 3; and
the outlet end of the pre-posed filter 2 is adjacent to the inlet end of the membrane filter 3, the initial filtered water outlet 111b is an annular opening which surrounds the pressurized water inlet 122.

It is to be understood that, the pre-posed filter 2, the membrane filter 3, and the post-posed filter 4 are integrated into a composite filter, as such the complete appliance is miniaturized, the number of the connectors and the risk of leakage are reduced. The pre-posed filter 2 can be a PAC (PP And C, PP cotton and activated carbon composite filter) pre-posed filter 2, for example, the pre-posed filter 2 includes a PP non-woven fabric winding layer (the precision of the PP non-woven fabric winding layer can be 5um) and an activated carbon fiber winding layer which are successively arranged from outside to inside along a radial direction. The pre-posed filter 2 can effectively remove rust and sediment in the water, and can adsorb color, smell, some organic contaminants, and chlorine in water, to ensure the water flowing into the membrane filter 3 has a good quality, and improve the lifespan of the membrane filter 3. The post-posed filter 4 can be an activated carbon layer, for example, the post-posed filter 4 can be an activated carbon rod. The post-posed filter 4 can effectively remove volatile organic compounds, and residual chlorine, and can retain the minerals, such as, trace calcium, silicic acid, carbonate, and so on, as such the taste of the filtered water is sweet and soft. In addition, in the exemplary embodiment, the water purification system applying the composite filter assembly further includes a booster pump (not shown) and a waste water solenoid valve (not shown); the booster pump is located at a downstream position of the pre-posed filter 2, as such the water is filtered by the pre-posed filter 2 first, and then flows into the booster pump, to reduce the risk of blocking the booster pump, improve the lifespan and the reliability of the water purification system. The waste water solenoid valve is communicated with the waste water outlet, the waste water solenoid valve can be used for adjusting the ratio of the waste water, to balance the working pressure of the water purification system.

The technical solutions of the present disclosure can be applied to the large flux water purifier, the pre-posed filter 2, the membrane filter 3, and the post-posed filter 4 are integrated into a composite filter, as such the complete appliance is miniaturized, the number of the connectors and the risk of leakage are reduced. And, the initial filtered water outlet 111b connected with the booster pump is configured to surround the pressurized water inlet 122, therefore the booster pump can be directly connected with the initial filtered water outlet 111b and the pressurized water inlet 122 after passing through a connector, as such there is no need to introduce a connecting pipe, etc. The mounting of the complete appliance is simplified, the mounting efficiency of the water purifier is improved.

Furthermore, the post-posed filter 4 is located upon the pre-posed filter 2 and the membrane filter 3; the initial filtered water outlet 111b and the pressurized water inlet 122 are both defined at the lower end surface of the housing 1. In the exemplary embodiment, the raw water inlet, the pure water outlet, and the waste water outlet are all arranged at the top end of the housing 1. It is to be understood that, the structures, such as, booster pump and the waste water solenoid valve, are respectively arranged at the top end and the lower end of the composite filter assembly, therefore, the structures of the water purification system are properly arranged, and during the mounting process of the structures, the booster pump would not strike the other structures. It is to be understood that, the present disclosure is not limited to this, in another exemplary embodiment, the initial filtered water outlet 111b and the pressurized water inlet 122 are arranged at a top end surface of the housing 1, while the raw water inlet, the pure water outlet, and the waste water outlet arc all arranged at the lower end of the housing 1.

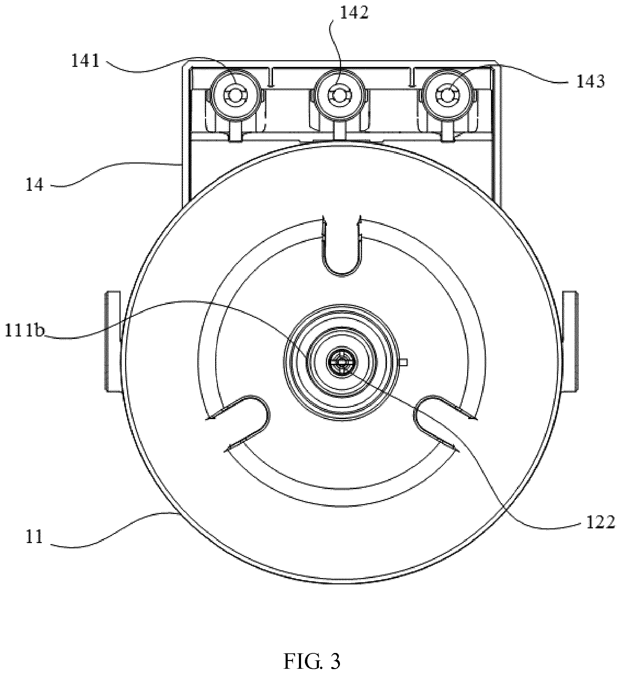

Furthermore, referring to FIGS. 3-5, the pressurized water inlet 122 is circular-shaped, and located at a center position of the lower end surface of the housing, the initial filtered water outlet 111b and the pressurized water inlet 122 are concentric. It is to be understood that, it is easy and convenient to manufacture the circular opening, then the pressurized water inlet 122 and the pressurized water inlet 111b are concentric, as such water can flow in or flow out uniformly in each direction, so as to ensure that the booster pump can be tightly connected with the pressurized water inlet 111b and the pressurized water inlet 122 In another aspect, a center of the pressurized water inlet 122 and a center of the pressurized water inlet 111b are not concentric, in addition, the pressurized water inlet 122 can also have other shape, for example, the pressurized water inlet 122 is rectangular.

Furthermore, a radius of the pressurized water inlet 122 is 10mm to 20mm, a radius of a circle defined by the outer peripheral edge of the initial filtered water outlet 111b is 25mm to 35mm. It is to be understood that, the radius of the pressurized water inlet 122 corresponds to the size of the pressurized water inlet 122, a value of subtracting the radius of the pressurized water inlet 122 from the radius of the circle of the outer peripheral edge of the initial filtered water outlet 111b can be defined as the size of the initial filtered water outlet 111b. It is not good for ensure the pressure of the water circulation in the composite filter composite and the seal of the connecting positions among the two openings and the booster pump when the size of the initial filtered water outlet 111b and the size of the pressurized water inlet 122 are too large or too small.

Furthermore, the housing 1 includes an outer housing 11, and an inner housing 12 received in the outer housing 11, the pre-posed filter 2 is defined between the inner surface of the outer housing 11 and the outer surface of the inner housing 12, the membrane filter 3 is received in the inner housing 12, the post-posed filter 4 is defined at an up end of the inner housing 12; a lower end surface of the outer housing 11 defines a first opening, the periphery of the first opening extends downwards to form a first annular rib 111a; a lower end surface of the inner housing 12 defines a second opening, a projection of the second opening along an up-down direction is located in the first opening, the periphery of the second opening extends downwards to form a second annular rib 121, the second annular rib 121 extends into the first annular rib 111a; and an inner circumference surface of the first annular rib 111a and an outer circumferential surface of the second annular rib 121 cooperatively form the initial filtered water outlet 111b, the inner circumference surface of the second annular rib 121 defines the pressurized water inlet 122.

It is to be understood that, it is easy, simple, and quick to manufacture the pressurized water inlet 122 and the initial filtered water outlet 111b, and it is also simple to mount the composite filter assembly. In the exemplary embodiment, the outer housing 11 includes a body 111 and a cover 112 configured to cover the body 111, the cover 112 defines the raw water inlet, the pure water outlet, and the waste water outlet, in detail, the raw water inlet can be configured to communicate with the top end of a portion between the outer housing 11 and the inner housing 12, raw water can flow into from the top end, and then can be filtered by the pre-posed filter 2, and flow out from the lower end of the portion between the outer housing 11 and the inner housing 12, then the filtered water can flow into the booster pump to be pressurized, the pressurized water can flow into the inner housing 12 through the pressurized water inlet 122, to be filtered. In addition, in the exemplary embodiment, the composite filter assembly further includes an annular end cover 13, the end cover 13 is defined in the lower end of the portion between the outer housing 11 and the inner housing 12, a top end surface of the end cover 13 can be configured to support the pre-posed filter 2. Of course, in another exemplary embodiment, the pre-posed filter 2 can be fixed between the outer housing 11 and the inner housing 12 through other methods, the present disclosure does not limit the fixing method. It is to be understood that, the present disclosure is not limited to this, in another exemplary embodiment, the pressurized water inlet 122 and the initial filtered water outlet 111b are both defined at the lower end surface of the outer housing 11, while the initial filtered water outlet 111b is an annular opening which surrounds the pressurized water inlet 122.

Furthermore, the outer circumferential surface of the first annular rib 111a and the outer circumferential surface of the second annular rib 121 both define a sealing structure, the sealing structure is configured as an adaptor (not shown) which is tightly connected to a booster pump of the water purification system. In an exemplary embodiment, the booster pump is connected with the pressurized water inlet 122 and the initial filtered water outlet 111b through an adaptor, the adaptor includes an outer ring element and an inner ring element which is coaxial with the outer ring element, the inner circumference surface of the inner ring element is connected with the outer circumferential surface of the second annular rib 121 in the sealing manner, the inner circumference surface of the outer ring element is connected with the inner circumference surface of the first annular rib 111a in the sealing manner, of course, in another exemplary embodiment, the booster pump is connected with the first annular rib 111a and the second annular rib 121 through other modes, the present disclosure is not limited to this.

Furthermore, the sealing structures include one sealing annular groove 111c defined at the outer circumferential surface of the first annular rib 111a and a sealing element 111d received in the sealing annular groove 111c, and another sealing annular groove 111c defined at the outer circumferential surface of the second annular rib 121 and another sealing element 111d received in the another sealing annular groove 111c. It is to be understood that, the cooperation between the sealing annular groove 111c and the sealing element 111d is a common technical mean broadly used in the water purifier technology, and the cooperation has the advantages of good sealability, simple process, etc. Of course, in another exemplary embodiment, the sealing structures can also include elastic sealing rings defined on the circumference surface of the first annular rib 111a and the second annular rib 121, the present disclosure does not limit the type of the sealing structure. In addition, in the exemplary embodiment, the sealing element 111d includes at least two overlapped O type rings, it is to be understood that, the O type rings are easy to obtain, and cheap, as such it is beneficial to reduce the cost of the water purification system; of course, in another exemplary embodiment, the scaling element 111d can also be the sealant coated in the sealing annular groove 111c, the present disclosure does not limit the type of the sealing element 111d.

Furthermore, a connector 14 configured to connect with an external structure is defined at a top end of the outer housing 11, a raw water connector 141, a pure water connector 142, and a waste water connector 143 are all defined on the connector 14 in a parallel manner, the raw water connector 141 communicates with the raw water inlet, the pure water connector 142 communicates with the pure water outlet, the waste water connector 143 communicates with the waste water outlet. It is to be understood that, the connectors are arranged together in a compact fashion, it is beneficial to connect with the external structure, such as the waste water solenoid valve, etc. The mounting process is also simplified. In the exemplary embodiment, the connector 14 is located on the top end surface of the cover 112, and the connector 14 includes a mounting element protruded from the cover 112, a lower end surface of the mounting element protrudes the raw water connector 141, the pure water connector 142, and the waste water connector 143 which are arranged from left to right.; of course, in another exemplary embodiment, the connector 14 can also defined at the outer circumferential surface of the top end of the outer housing 11, the present disclosure does not limit the position of the connector 14.

Furthermore, the membrane filter 3 includes a central collecting pipe 32, and a membrane filter body 31 coiled around the central collecting pipe 32, the pressurized water inlet 122 is communicated with an inlet end of the membrane filter body 3, a wall of the central collecting pipe 32 defines a plurality of communicating ports 321 which communicate with an outlet end of the membrane filter body 31, a top end of the central collecting pipe 32 is communicated with an inlet end of the post-posed filter 4. It is to be understood that, the inner cavity of the membrane filter body 31 is reasonably used, which can be configured to introduce the pressurized water, and expel the secondary filtered water. In detail, the water flowing from the pressurized water inlet 122 are introduced to a position adjacent to the inner circumference surface of the inner housing 12, as such the water can flow into the membrane filter 3 to be secondary filtered, and the waste water can pass through the top end of the membrane filter body 31 and then flow out through the waste water outlet, the secondary filtered water can flow into the central collecting pipe 32 through the communicating ports 321, and then the secondary filtered water can be introduced to the inlet end of the post-posed filter 4.

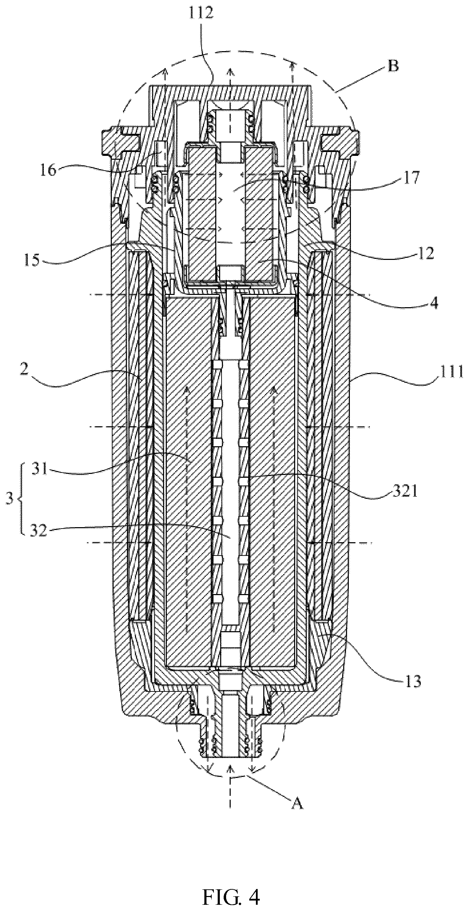

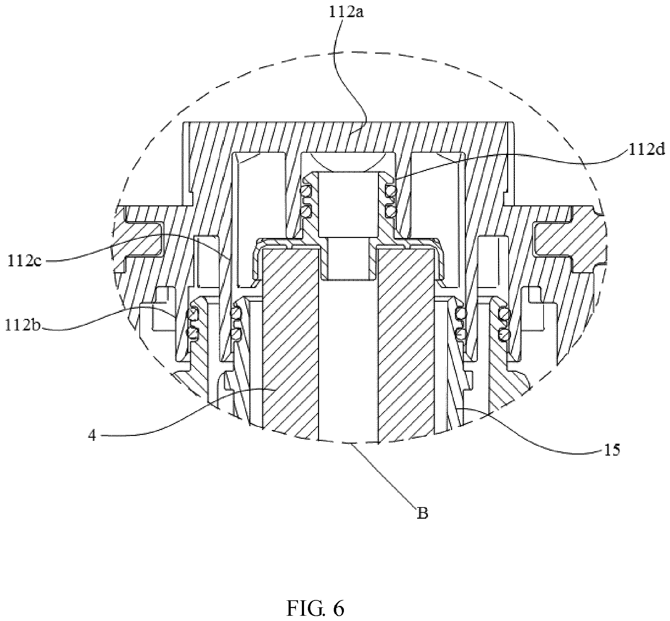

Furthermore, referring to FIGS. 4, 6, the composite filter assembly further includes a hollowed connecting housing 15, at least a portion of the connecting housing 15 is defined in a top end of the inner housing 12, and the top end of the central collecting pipe 32 is communicated with an inner cavity of the connecting housing 15; and an outer surface of the connecting housing 15 and an inner surface of the inner housing 12 cooperatively define a waste water flow channel 16 for leading waste water from the membrane filter body 31 to the waste water outlet; the post-posed filter 4 is located in the connecting housing 15, the post-posed filter 4 and an inner surface of the connecting housing 15 cooperatively define a flow channel, an inner cavity of the post-posed filter 4 defines a pure water flow channel 17 for leading pure water to the pure water outlet.

In the exemplary embodiment, the connecting housing 15 includes a barrel-shaped wall, and an annular connector located at a top end surface of the barrel-shaped wall, the cover 112 includes a cover body 112a configured to cover the body 111, and a first annular element 112b, a second annular element 112c, and a third annular element 112d which are all arranged from the outside to inside and extended downwards from the lower end surface of the cover body 112a. An inner circumference surface of the first annular element 112b is connected with the outer circumferential surface of the inner housing 12 in the sealing mode, an inner circumference surface of the second annular element 112c is connected with the outer circumferential surface of the barrel-shaped wall in the sealing mode, an inner circumference surface of the third annular element 112d is connected with the outer circumferential surface of the annular connector in the sealing mod, as such, the waste water filtered through the membrane filter body 31 can flow to the waste water outlet after passing through the waste water flow channel 16 between the inner circumference surface of inner housing 12 and the outer circumferential surface of second annular element 112c; the secondary filtered water filtered through the membrane filter body 31 can flow into the barrel-shaped wall through the central collecting pipe 32, and the secondary filtered water is filtered through the post-posed filter 4 and then flows out to the pure water outlet through the pure water flow channel 17 formed by the inner cavity of the post-posed filter 4, as such the whole water purification process is completed. It is to be understood that, the present disclosure is not limited to this, in another exemplary embodiment, the connecting housing 15 can have other shape or design, to form the waste water flow channel 16 and the pure water flow channel 17.

The present disclosure also provide a water purification system, the water purification system includes a booster pump, a water storage device, and a composite filter assembly. The detail structure of the composite filter assembly can be referred to the above description. One end of the booster pump is connected with the initial filtered water outlet, the other end of the booster pump is connected with the pressurized water inlet. As the water purification system includes all technical proposals of all the exemplary embodiments, and the achieved technical effects are the same, no need to repeated again.

The present disclosure also provides a composite filter assembly, which is applied to the water purification system.

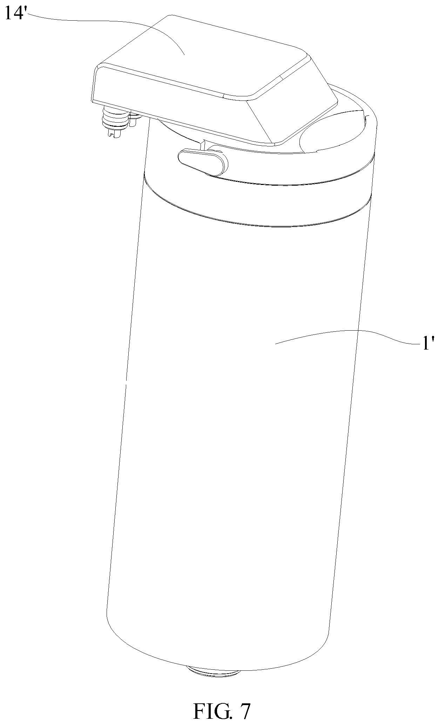

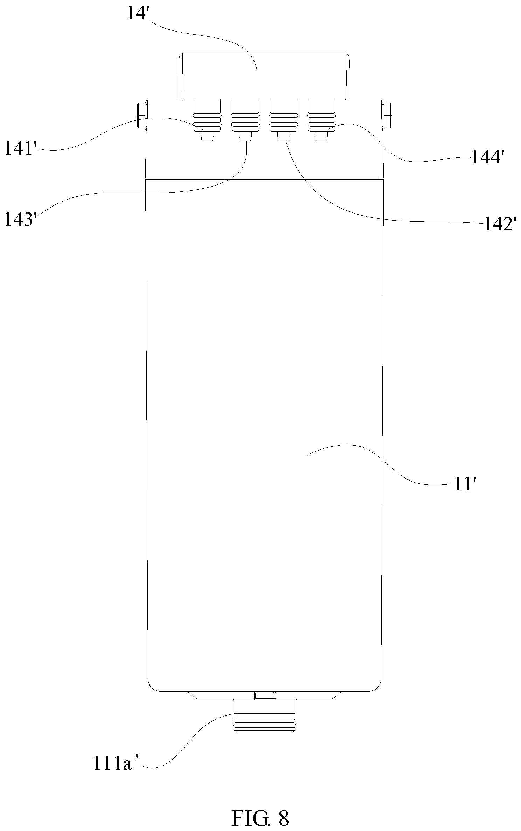

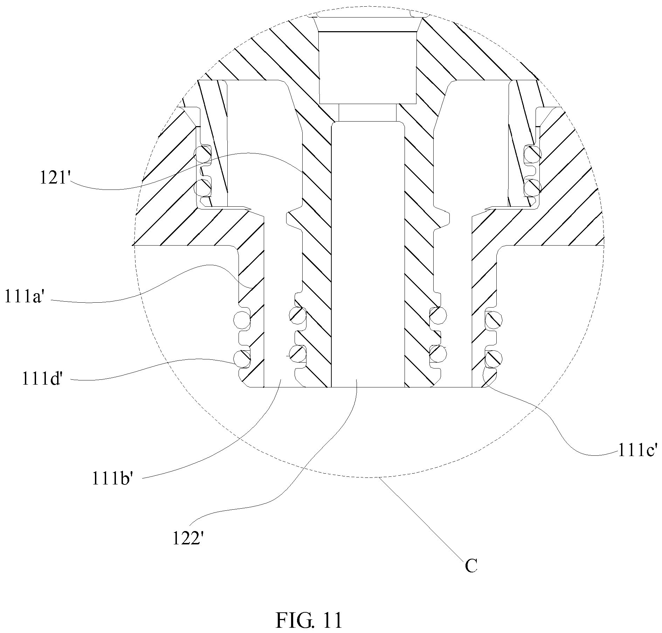

In the exemplary embodiment, referring to FIGS. 7-11, the composite filter assembly includes a housing 1', and a composite filter defined in the housing 1', the housing 1' defines a raw water inlet (not shown), an initial filtered water outlet 111b', a pressurized water inlet 122', a water storage port (not shown), a pure water outlet (not shown), and a waste water outlet (not shown), the composite filter includes a pre-posed filter 2', a membrane filter 3', and a post-posed filter 4', the membrane filter 3' is received in the pre-posed filter 2', and separated from the pre-posed filter 2', the post-posed filter 4' is connected with the membrane filter 3' and located at a downstream position of the membrane filter 3';
the initial filtered water outlet 111b' is communicated with an outlet end of the prc-poscd filter 2', the pressurized water inlet 122' is communicated with an inlet end of the membrane filter 3', the water storage port is communicated with the outlet end of the membrane filter 3', and communicated with the inlet end of the post-posed filter 4'; and
the outlet end of the pre-posed filter 2' is adjacent to the inlet end of the membrane filter 3', the initial filtered water outlet 111b' is an annular opening which surrounds the pressurized water inlet 122'.

It is to be understood that, the pre-posed filter 2', the membrane filter 3', and the post-posed filter 4' are integrated into a composite filter, as such the complete appliance is miniaturized, the number of the connectors and the risk of leakage are reduced. The pre-posed filter 2' can be a PAC (PP And C, PP cotton and activated carbon composite filter) pre-posed filter 2', for example, the pre-posed filter 2' includes a PP non-woven fabric winding layer (the precision of the PP non-woven fabric winding layer can be 5um) and an activated carbon fiber winding layer which are successively arranged from outside to inside along a radial direction. The pre-posed filter 2' can effectively remove rust and sediment in the water, and can adsorb color, smell, some organic contaminants, and chlorine in water, to ensure the water flowing into the membrane filter 3' has a good quality, and improve the lifespan of the membrane filter 3'. The post-posed filter 4' can be an activated carbon layer, for example, the post-posed filter 4 can be an activated carbon rod. The post-posed filter 4' can effectively remove volatile organic compounds, and residual chlorine, and can retain the minerals, such as, trace calcium, silicic acid, carbonate, and so on, as such the taste of the filtered water is sweet and soft. In addition, in the exemplary embodiment, the water purification system applying the composite filter assembly further includes a booster pump (not shown), a waste water solenoid valve (not shown), and a water storage device (not shown); the booster pump is located at a downstream position of the pre-posed filter 2', as such the water is filtered by the pre-posed filter 2' first, and then flows into the booster pump, to reduce the risk of blocking the booster pump, improve the lifespan and the reliability of the water purification system. The waste water solenoid valve is communicated with the waste water outlet, the waste water solenoid valve can be used for adjusting the ratio of the waste water, to balance the working pressure of the water purification system; the water storage device is connected with the water storage port, the water storage device is configured to store the pure water from the water storage port. The waste water solenoid valve is connected with the waste water outlet. As such, the pure water can be stored in the water storage device through the water storage device, when the water pressure is not enough, the composite filter assembly can also meet the user's large flux demand.

The technical solutions of the present disclosure can be applied to the small flux water purifier, the pre-posed filter 2', the membrane filter 3', and the post-posed filter 4' are integrated into a composite filter, as such the complete appliance is miniaturized, the number of the connectors and the risk of leakage are reduced. And, the initial filtered water outlet 111b' connected with the booster pump is configured to surround the pressurized water inlet 122', therefore the booster pump can be directly connected with the initial filtered water outlet 111b' and the pressurized water inlet 122' after passing through a connector, as such there is no need to introduce a connecting pipe, etc. The mounting of the complete appliance is simplified, the mounting efficiency of the water purifier is improved.

Furthermore, the post-posed filter 4' is located upon the pre-posed filter 2' and the membrane filter 3'; the initial filtered water outlet 111b' and the pressurized water inlet 122' are both defined at the lower end surface of the housing 1'. In the exemplary embodiment, the raw water inlet, the water storage port, the pure water outlet, and the waste water outlet are all arranged at the top end of the housing 1'. It is to be understood that, the structures, such as, booster pump and the water storage device, are respectively arranged at the top end and the lower end of the composite filter assembly, therefore, the structures of the water purification system are properly arranged, and during the mounting process of the structures, the booster pump would not strike the other structures. It is to be understood that, the present disclosure is not limited to this, in another exemplary embodiment, the initial filtered water outlet 111b' and the pressurized water inlet 122' are arranged at a top end surface of the housing 1', while the raw water inlet, the water storage port, the pure water outlet, and the waste water outlet are all arranged at the lower end of the housing 1'.

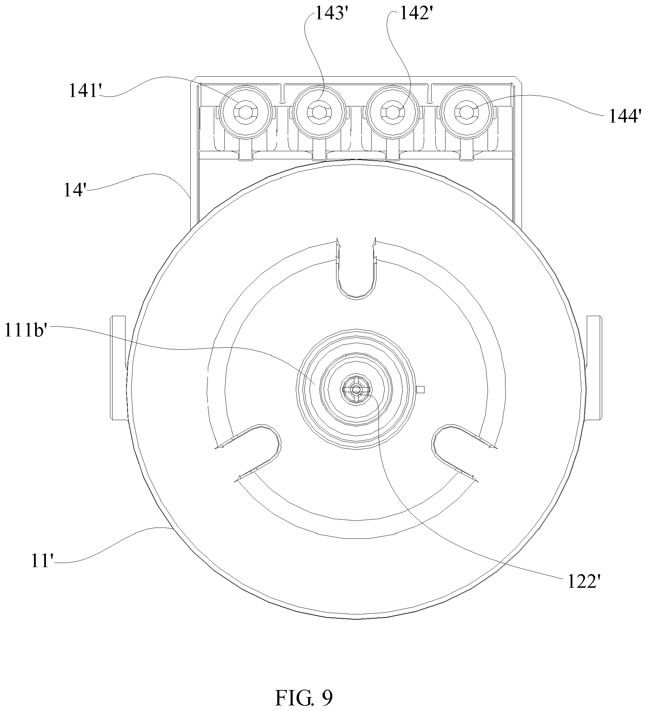

Furthermore, referring to FIGS. 9-11, the pressurized water inlet 122' is circular-shaped, and located at a center position of the lower end surface of the housing, the initial filtered water outlet 111b' and the pressurized water inlet 122' are concentric. It is to be understood that, it is easy and convenient to manufacture the circular opening, then the pressurized water inlet 122' can be configured to be coaxial with the pressurized water inlet 111b', as such water can flow in or flow out uniformly in each direction, so as to ensure that the booster pump can be tightly connected with the pressurized water inlet 111b' and the pressurized water inlet 122'. It is to be understood that, the present disclosure is not limited to this, in another exemplary embodiment, a center of the pressurized water inlet 122' can be configured to be not coaxial with a center of the pressurized water inlet 111b', in addition, the pressurized water inlet 122' can also have other shape, for example, the pressurized water inlet 122' is rectangular.

Furthermore, a radius of the pressurized water inlet 122' is 10mm to 20mm, a radius of a circle defined by the outer peripheral edge of the initial filtered water outlet 111b' is 25mm to 35mm. It is to be understood that, the radius of the pressurized water inlet 122' corresponds to the size of the pressurized water inlet 122', a value of subtracting the radius of the pressurized water inlet 122' from the radius of a circle of the outer peripheral of the initial filtered water outlet 111b' can be defined as the size of the initial filtered water outlet 111b'. It is not good for ensure the pressure of the water circulation in the composite filter composite and the seal of the connecting positions among the two openings and the booster pump when the size of the initial filtered water outlet 111b' and the size of the pressurized water inlet 122' are too large or too small.

Furthermore, the housing 1' includes an outer housing 11', and an inner housing 12' received in the outer housing 11', the pre-posed filter 2' is defined between the inner surface of the outer housing 11' and the outer surface of the inner housing 12', the membrane filter 3' is received in the inner housing 12', the post-posed filter 4' is defined at a top end of the inner housing 12'; a lower end surface of the outer housing 11' defines a first opening, the periphery of the first opening extends downwards to form a first annular rib 111a'; a lower end surface of the inner housing 12' defines a second opening, a projection of the second opening along an up-down direction is defined in the first opening, the periphery of the second opening extends downwards to form a second annular rib 121', the second annular rib 121' extends into the first annular rib 111a'; and an inner circumference surface of the first annular rib 111a' and an outer circumferential surface of the second annular rib 121' cooperatively form the initial filtered water outlet 111b', an inner circumference surface of the second annular rib 121' defines the pressurized water inlet 122'.

It is to be understood that, it is easy, simple, and quick to manufacture the pressurized water inlet 122' and the initial filtered water outlet 111b', and it is also simple to mount the composite filter assembly. In the exemplary embodiment, the outer housing 11' includes a body 111' and a cover 112' configured to cover the body 111', the cover 112' defines the raw water inlet, the water storage port, the pure water outlet, and the waste water outlet, in detail, the raw water inlet can be configured to communicate with the top end of a portion between the outer housing 11' and the inner housing 12', raw water can flow into from the top end, and then can be filtered by the pre-posed filter 2', and flow out from the lower end of the portion between the outer housing 11 and the inner housing 12', then the filtered water can flow into the booster pump to be pressurized, the pressurized water can flow into the inner housing 12' through the pressurized water inlet 122', to be filtered. In addition, in the exemplary embodiment, the composite filter assembly further includes an annular end cover 13', the end cover 13' is defined in the lower end of the portion between the outer housing 11 and the inner housing 12', a top end surface of the end cover 13' can be configured to support the pre-posed filter 2'. Of course, in another exemplary embodiment, the pre-posed filter 2' can be fixed between the outer housing 11' and the inner housing 12' through other methods, the present disclosure does not limit the fixing method. It is to be understood that, the present disclosure is not limited to this, in another exemplary embodiment, the pressurized water inlet 122' and the initial filtered water outlet 111b' arc both defined at the lower end surface of the outer housing 11', while the initial filtered water outlet 111b' is an annular opening which surrounds the pressurized water inlet 122'.

Furthermore, the outer circumferential surface of the first annular rib 111a' and the outer circumferential surface of the second annular rib 121' both define a sealing structure, the sealing structure is configured as an adaptor (not shown) which is tightly connected to a booster pump of the water purification system. In an exemplary embodiment, the booster pump is connected with the pressurized water inlet 122' and the initial filtered water outlet 111b' through an adaptor, the adaptor includes an outer ring element and an inner ring element which is coaxial with the outer ring element, the inner circumference surface of the inner ring element is connected with the outer circumferential surface of the second annular rib 121' in the sealing manner, the inner circumference surface of the outer ring element is connected with the inner circumference surface of the first annular rib 111a' in the sealing manner, of course, in another exemplary embodiment, the booster pump is connected with the first annular rib 111a' and the second annular rib 121' through other modes, the present disclosure is not limited to this.

Furthermore, the sealing structures include one sealing annular groove 111c' defined at the outer circumferential surface of the first annular rib 111a' and a sealing element 111d' received in the sealing annular groove 111c', and another sealing annular groove 111c' defined at the outer circumferential surface of the second annular rib 121' and another sealing element 111d' received in the another sealing annular groove 111c'. It is to be understood that, the cooperation between the sealing annular groove 111c' and the sealing element 111d' is a common technical mean broadly used in the water purifier technology, and the cooperation has the advantages of good sealability, simple process, etc. Of course, in another exemplary embodiment, the sealing structures can also include elastic sealing rings defined on the circumference surface of the first annular rib 111a' and the second annular rib 121', the present disclosure does not limit the type of the sealing structure. In addition, in the exemplary embodiment, the sealing element 111d' includes at least two overlapped O type rings, it is to be understood that, the O type rings arc easy to obtain, and cheap, as such it is beneficial to reduce the cost of the water purification system; of course, in another exemplary embodiment, the sealing element 111d' can also be the sealant coated in the sealing annular groove 111c', the present disclosure does not limit the type of the sealing element 111d'.

Furthermore, a connector 14' configured to connect with an external structure is defined at a top end of the outer housing 11', a raw water connector 141', a water storage connector 142', a pure water connector 143', and a waste water connector 144' are all defined on the connector 14' in a parallel manner, the raw water connector 141' communicates with the raw water inlet, the water storage connector 142' communicates with the water storage port, the pure water connector 143' communicates with the pure water outlet, the waste water connector 144' communicates with the waste water outlet. It is to be understood that, the connectors are arranged together in a compact fashion, it is beneficial to connect with the external structure, such as the waste water solenoid valve, etc. The mounting process is also simplified. In the exemplary embodiment, the connector 14' is located on the top end surface of the cover 112', and the connector 14' includes a mounting element protruded from the cover 112', a lower end surface of the mounting element protrudes the raw water connector 141', the water storage connector 142', the pure water connector 143', and the waste water connector 144' which are arranged from left to right.; of course, in another exemplary embodiment, the connector 14' can also defined at the outer circumferential surface of the top end of the outer housing 11', the present disclosure does not limit the position of the connector 14'.

Furthermore, the membrane filter 3' includes a central collecting pipe 32', and a membrane filter body 31' coiled around the central collecting pipe 32', the pressurized water inlet 122' is communicated with an inlet end of the membrane filter body 3', a wall of the central collecting pipe 32' defines a plurality of communicating ports 321' which are communicated with an outlet end of the membrane filter body 31', a top end of the central collecting pipe 32' is communicated with an inlet end of the post-posed filter 4' and the water storage port. It is to be understood that, the inner cavity of the membrane filter body 31' is reasonably used, which can be configured to introduce the pressurized water, and expel the secondary filtered water. In detail, the water flowing from the pressurized water inlet 122' are introduced to a position adjacent to the inner circumference surface of the inner housing 12', as such the water can flow into the membrane filter 3' to be secondary filtered, and the waste water can pass through the top end of the membrane filter body 31' and then flow out through the waste water outlet, the secondary filtered water can flow into the central collecting pipe 32' through the communicating ports 321', and then the secondary filtered water can be introduced to the inlet end of the post-posed filter 4'.

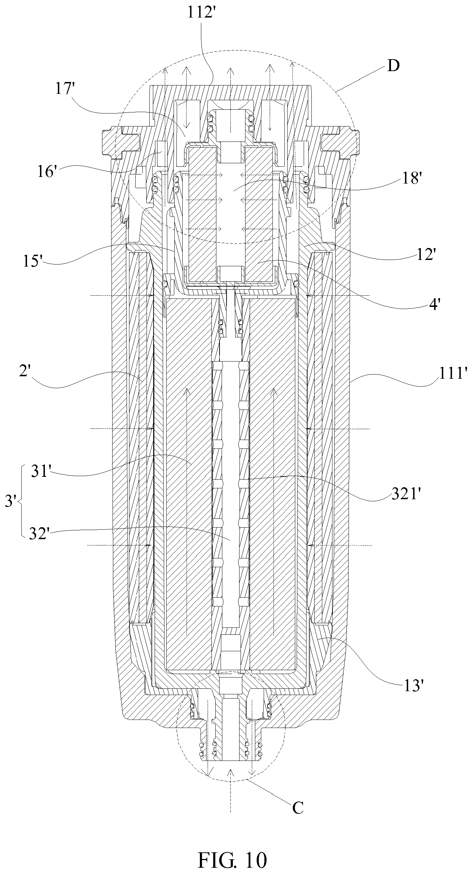

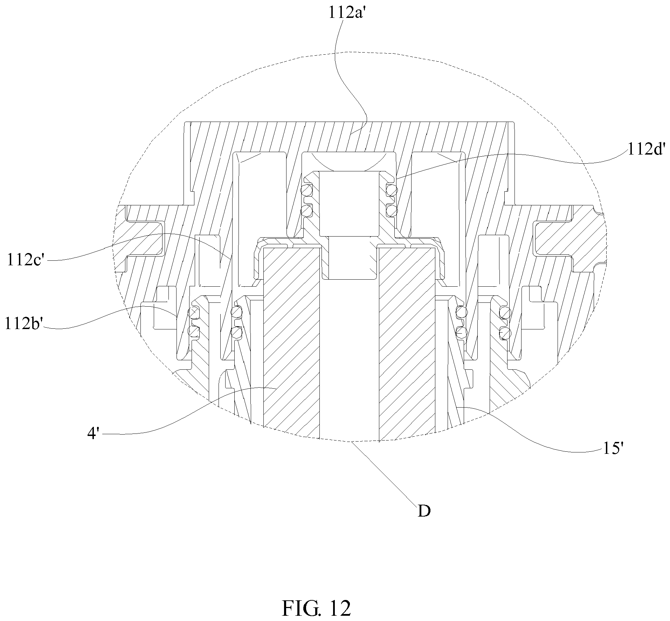

Furthermore, referring to FIGS. 10, 12, the composite filter assembly further includes a hollowed connecting housing 15', at least a portion of the connecting housing 15' is defined in a top end of the inner housing 12', and the top end of the central collecting pipe 32' is communicated with an inner cavity of the connecting housing 15'; and an outer surface of the connecting housing 15' and an inner surface of the inner housing 12' cooperatively define a waste water flow channel 16' for leading waste water from the membrane filter body 31' to the waste water outlet; the post-posed filter 4 is located in the connecting housing 15', the post-posed filter 4' and an inner surface of the connecting housing 15' cooperatively define a water storage channel 17' for leading water flow from the top end of the central collecting pipe 32' to the water storage port, an inner cavity of the post-posed filter 4' defines a pure water flow channel 18 for leading pure water to the pure water outlet.

In the exemplary embodiment, the connecting housing 15' includes a barrel-shaped wall, and an annular connector located at a top end surface of the barrel-shaped wall, the cover 112' includes a cover body 112a' configured to cover the body 111', and a first annular element 112b', a second annular element 112c', and a third annular element 112d' which are all arranged from the outside to inside and extended downwards from the lower end surface of the cover body 112a'. An inner circumference surface of the first annular element 112b' is connected with the outer circumferential surface of the inner housing 12' in the sealing mode, an inner circumference surface of the second annular element 112c' is connected with the outer circumfcrcntial surface of the barrel-shaped wall in the scaling mode, an inner circumference surface of the third annular element 112d' is connected with the outer circumferential surface of the annular connector in the sealing mod, as such, the waste water filtered through the membrane filter body 31' can flow to the waste water outlet after passing through the waste water flow channel 16' between the inner circumference surface of inner housing 12' and the outer circumferential surface of second annular element 112c'; the secondary filtered water filtered through the membrane filter body 31' can flow into the barrel-shaped wall through the central collecting pipe 32', a part of the secondary filtered water can flow to the water storage port from the water storage channel 17' between the inner circumference surface of the second annular element 112c' and the inner circumference surface of the barrel-shaped wall, the other part of the secondary filtered water is filtered through the post-posed filter 4' and then flows out to the pure water outlet through the pure water flow channel 18' formed by the inner cavity of the post-posed filter 4', as such the whole water purification process is completed. It is to be understood that, the present disclosure is not limited to this, in another exemplary embodiment, the connecting housing 15' can have other shape or design, to form the waste water flow channel 16', the water storage channel 17' and the pure water flow channel 18'.

The present disclosure also provide a water purification system, the water purification system includes a booster pump, a water storage device, and a composite filter assembly. The detail structure of the composite filter assembly can be referred to the above description. One end of the booster pump is connected with the initial filtered water outlet, the other end of the booster pump is connected with the pressurized water inlet, the water storage device is connected with the water storage port. As the water purification system includes all technical proposals of all the exemplary embodiments, and the achieved technical effects are the same, no need to be repeated again.

The foregoing description merely depicts some illustrative embodiments of the present application and therefore is not intended to limit the scope of the application. An equivalent structural or flow changes made by using the content of the specification and drawings of the present application, or any direct or indirect applications of the disclosure on any other related fields shall all fall in the scope of the application.

## Claims

1. A water purification system comprising a composite filter assembly and a booster pump, wherein
the composite filter assembly comprises
a housing (1), and a composite filter defined in the housing (1), the housing (1) defines a raw water inlet, an initial filtered water outlet (111b), a pressurized water inlet (122), a pure water outlet, a waste water outlet, and a booster pump,
the composite filter comprises a pre-posed filter (2), a membrane filter (3), and a post-posed filter (4), wherein
the pre-posed filter (2) and the membrane filter (3) are coaxial and are defined in a manner from outside to inside along a radial direction, and spaced from each other, and
the post-posed filter (4) is connected with the membrane filter (3) and located at a downstream position of the membrane filter (3), wherein the post-posed filter (4) is located upon the pre-posed filter (2) and the membrane filter (3);
the initial filtered water outlet (111b) is communicated with an outlet end of the pre-posed filter (2), the pressurized water inlet (122) is communicated with an inlet end of the membrane filter (3), wherein the initial filtered water outlet (111b) and the pressurized water inlet (122) are both defined at a lower end surface of the housing (1) and wherein the pressurized water inlet (122) is circular-shaped, and located at a center position of the lower end surface of the housing (1), the initial filtered water outlet (111b) and the pressurized water inlet (122) are concentric; and
the outlet end of the pre-posed filter (2) is adjacent to the inlet end of the membrane filter (3), the initial filtered water outlet (111b) is an annular opening which surrounds the pressurized water inlet (122); and
the booster pump is located at a downstream position of the pre-posed filter (2) and connected with the pressurized water inlet (122),
wherein the housing (1) comprises an outer housing (11), and an inner housing (12) received in the outer housing (11), the pre-posed filter (2) is defined between the inner surface of the outer housing (11) and the outer surface of the inner housing (12), the membrane filter (3) is received in the inner housing (12), the post-posed filter (4) is defined at an up end of the inner housing (12);
a lower end surface of the outer housing (11) defines a first opening, the periphery of the first opening extends downwards to form a first annular rib (111a);
a lower end surface of the inner housing (12) defines a second opening, a projection of the second opening along an up-down direction is located in the first opening, the periphery of the second opening extends downwards to form a second annular rib (121), the second annular rib (121) extends into the first annular rib (111a); and
an inner circumference surface of the first annular rib (111a) and an outer circumferential surface of the second annular rib (121) cooperatively form the initial filtered water outlet (111b), the inner circumference surface of the second annular rib (121) defines the pressurized water inlet (122).

2. The water purification system according to claim 1, wherein a radius of the pressurized water inlet (122) is 10mm to 20mm, a radius of a circle defined by the outer peripheral edge of the initial filtered water outlet (111b) is 25mm to 35mm.

3. The water purification system according to claim 1, wherein an outer circumferential surface of the first annular rib (111a) and the outer circumferential surface of the second annular rib (121) both define a sealing structure, the sealing structure is configured as an adaptor which is tightly connected to a booster pump of the water purification system.

4. The water purification system according to claim 3, wherein the sealing structures comprise one sealing annular groove (111c) defined at the outer circumferential surface of the first annular rib (111a) and one sealing element (111d) defined in the sealing annular groove (111c), and another sealing annular groove (111c) located at the outer circumferential surface of the second annular rib (121) and another sealing element (111d) defined in the another sealing annular groove (111c).

5. The water purification system according to claim 1, wherein a connector (14) configured to connect with an external structure is defined at a top end of the outer housing (11), a raw water connector (141), a pure water connector (142), and a waste water connector (143) are all defined on the connector (14) in a parallel manner, the raw water connector (141) communicates with the raw water inlet, the pure water connector (142) communicates with the pure water outlet, the waste water connector (143) communicates the waste water outlet.

6. The water purification system according to claim 1, wherein the membrane filter (3) comprises a central collecting pipe (32), and a membrane filter body (3) coiled around the central collecting pipe (32), the pressurized water inlet (122) is communicated with an inlet end of the membrane filter body (3), a wall of the central collecting pipe (32) defines a plurality of communicating ports (321) which communicate with an outlet end of the membrane filter body (3), a top end of the central collecting pipe (32) is communicated with an inlet end of the post-posed filter (4).

7. The water purification system according to claim 6, wherein the composite filter assembly further comprises a hollowed connecting housing (15), at least a portion of the connecting housing (15) is defined in a top end of the inner housing (12), and the top end of the central collecting pipe (32) is communicated with an inner cavity of the connecting housing (15); and
an outer surface of the connecting housing (15) and an inner surface of the inner housing (12) cooperatively define a waste water flow channel (16) for leading waste water from the membrane filter body (3) to the waste water outlet; the post-posed filter (4) is located in the connecting housing (15), the post-posed filter (4) and an inner surface of the connecting housing (15) cooperatively define a flow channel, an inner cavity of the post-posed filter (4) defines a pure water flow channel (17) for leading pure water to the pure water outlet.

8. A water purification system of claim 1, further comprising a water storage port, wherein the water storage port is communicated with an outlet end of the membrane filter (3') and inlet end of the post-posed filter (4').

9. The water purification system according to claim 8, wherein a connector configured to connect with an external structure is defined at a top end of the outer housing, a raw water connector, a water storage connector, a pure water connector, and a waste water connector are all defined on the connector in a parallel manner, the raw water connector communicates with the raw water inlet, the water storage connector communicates with the water storage port, the pure water connector communicates with the pure water outlet, the waste water connector communicates with the waste water outlet.

## Patentansprüche

1. Wasserreinigungssystem, umfassend eine Stufenfilteranordnung und eine Druckerhöhungspumpe, wobei
die Stufenfilteranordnung ein Gehäuse (1) und einen in dem Gehäuse (1) definierten Stufenfilter umfasst und das Gehäuse (1) einen Rohwassereinlass, einen Auslass (111b) für vorgefiltertes Wasser, einen Druckwassereinlass (122), einen Reinwasserauslass, einen Abwasserauslass und eine Druckerhöhungspumpe definiert,
der Stufenfilter einen vorgeschalteten Filter (2), einen Membranfilter (3) und einen nachgeschalteten Filter (4) umfasst, wobei
der vorgeschaltete Filter (2) und der Membranfilter (3) koaxial sind und auf eine Weise entlang einer Radialrichtung von außen nach innen definiert und voneinander beabstandet sind, und
der nachgeschaltete Filter (4) mit dem Membranfilter (3) verbunden ist und an einer Stelle stromabwärts des Membranfilters (3) angeordnet ist, wobei der nachgeschaltete Filter (4) auf dem vorgeschalteten Filter (2) und dem Membranfilter (3) angeordnet ist;
der Auslass (111b) für vorgefiltertes Wasser mit einem Auslassende des vorgeschalteten Filters (2) in Verbindung steht, der Druckwassereinlass (122) mit einem Einlassende des Membranfilters (3) in Verbindung steht, wobei der Auslass (111b) für vorgefiltertes Wasser und der Druckwassereinlass (122) beide an einer unteren Stirnfläche des Gehäuses (1) definiert sind, und wobei der Druckwassereinlass (122) kreisförmig ist und an einer mittleren Stelle der unteren Stirnfläche des Gehäuses (1) angeordnet ist, wobei der Auslass (111b) für vorgefiltertes Wasser und der Druckwassereinlass (122) konzentrisch sind; und
das Auslassende des vorgeschalteten Filters (2) dem Einlassende des Membranfilters (3) benachbart ist, es sich bei dem Auslass (111b) für vorgefiltertes Wasser um eine ringförmige Öffnung handelt, die den Druckwassereinlass (122) umgibt; und
die Druckerhöhungspumpe an einer Stelle stromabwärts des vorgeschalteten Filters (2) angeordnet ist und mit dem Druckwassereinlass (122) verbunden ist,
wobei das Gehäuse (1) ein äußeres Gehäuse (11) und ein in dem äußeren Gehäuse (11) aufgenommenes inneres Gehäuse (12) umfasst, der vorgeschaltete Filter (2) zwischen der inneren Oberfläche des äußeren Gehäuses (11) und der äußeren Oberfläche des inneren Gehäuses (12) definiert ist, der Membranfilter (3) in dem inneren Gehäuse (12) aufgenommen ist und der nachgeschaltete Filter (4) an einem oberen Ende des inneren Gehäuses (12) definiert ist;
wobei eine untere Stirnfläche des äußeren Gehäuses (11) eine erste Öffnung definiert und sich der Rand der ersten Öffnung nach unten erstreckt, um eine erste ringförmige Rippe (111a) zu bilden;
wobei eine untere Stirnfläche des inneren Gehäuses (12) eine zweite Öffnung definiert, ein Vorsprung der zweiten Öffnung entlang einer Aufwärts-AbwärtsRichtung in der ersten Öffnung angeordnet ist, sich der Rand der zweiten Öffnung nach unten erstreckt, um eine zweite ringförmige Rippe (121) zu bilden, und sich die zweite ringförmige Rippe (121) in die erste ringförmige Rippe (111a) erstreckt; und
wobei eine innere Umfangsoberfläche der ersten ringförmigen Rippe (111a) und eine äußere Umfangsoberfläche der zweiten ringförmigen Rippe (121) zusammenwirkend den Auslass (111b) für vorgefiltertes Wasser bilden und die innere Umfangsoberfläche der zweiten ringförmigen Rippe (121) den Druckwassereinlass (122) definiert.

2. Wasserreinigungssystem nach Anspruch 1, wobei ein Radius des Druckwassereinlasses (122) 10 mm bis 20 mm beträgt und ein Radius eines von der äußeren Umrandung des Auslasses (111b) für vorgefiltertes Wasser definierten Kreises 25 mm bis 35 mm beträgt.

3. Wasserreinigungssystem nach Anspruch 1, wobei eine äußere Umfangsoberfläche der ersten ringförmigen Rippe (111a) und die äußere Umfangsoberfläche der zweiten ringförmigen Rippe (121) beide eine Dichtungsstruktur definieren, wobei die Dichtungsstruktur als Adapter konfiguriert ist, der mit einer Druckerhöhungspumpe des Wasserreinigungssystems dicht verbunden ist.

4. Wasserreinigungssystem nach Anspruch 3, wobei die Dichtungsstrukturen eine an der äußeren Umfangsoberfläche der ersten ringförmigen Rippe (111a) definierte dichtende Ringnut (111c) und ein in der dichtenden Ringnut (111c) definiertes Dichtungselement (111d) und eine andere an der äußeren Umfangsoberfläche der zweiten ringförmigen Rippe (121) angeordnete dichtende Ringnut (111c) und ein anderes in der anderen dichtenden Ringnut (111c) definiertes Dichtungselement (111d) umfassen.

5. Wasserreinigungssystem nach Anspruch 1, wobei ein zum Verbinden mit einer externen Struktur konfigurierter Verbinder (14) an einem oberen Ende des äußeren Gehäuses (11) definiert ist, ein Rohwasserverbinder (141), ein Reinwasserverbinder (142) und ein Abwasserverbinder (143) alle auf parallele Weise an dem Verbinder (14) definiert sind, wobei der Rohwasserverbinder (141) mit dem Rohwassereinlass in Verbindung steht, der Reinwasserverbinder (142) mit dem Reinwasserauslass in Verbindung steht und der Abwasserverbinder (143) mit dem Abwasserauslass in Verbindung steht.

6. Wasserreinigungssystem nach Anspruch 1, wobei der Membranfilter (3) ein mittiges Sammelrohr (32) und einen um das mittige Sammelrohr (32) gewickelten Membranfilterkörper (3) umfasst, der Druckwassereinlass (122) mit einem Einlassende des Membranfilterkörpers (3) in Verbindung steht, eine Wand des mittigen Sammelrohrs (32) eine Vielzahl von Verbindungsöffnungen (321) definiert, die mit einem Auslassende des Membranfilterkörpers (3) in Verbindung stehen, und ein oberes Ende des mittigen Sammelrohrs (32) mit einem Einlassende des nachgeschalteten Filters (4) in Verbindung steht.

7. Wasserreinigungssystem nach Anspruch 6, wobei die Stufenfilteranordnung ferner ein ausgehöhltes Verbindungsgehäuse (15) umfasst, wobei mindestens ein Abschnitt des Verbindungsgehäuses (15) in einem oberen Ende des inneren Gehäuses (12) definiert ist und das obere Ende des mittigen Sammelrohrs (32) mit einer inneren Höhlung des Verbindungsgehäuses (15) in Verbindung steht; und
wobei eine äußere Oberfläche des Verbindungsgehäuses (15) und eine innere Oberfläche des inneren Gehäuses (12) zusammenwirkend einen Abwasserströmungskanal (16) zum Leiten von Abwasser von dem Membranfilterkörper (3) zu dem Abwasserauslass definieren; der
nachgeschaltete Filter (4) in dem Verbindungsgehäuse (15) angeordnet ist, der nachgeschaltete Filter (4) und eine innere Oberfläche des Verbindungsgehäuses (15) zusammenwirkend einen Strömungskanal definieren und eine innere Höhlung des nachgeschalteten Filters (4) einen Reinwasserströmungskanal (17) zum Leiten von Reinwasser zu dem Reinwasserauslass definiert.

8. Wasserreinigungssystem nach Anspruch 1, ferner umfassend eine Wasserspeicheröffnung, wobei die Wasserspeicheröffnung mit einem Auslassende des Membranfilters (3') und einem Einlassende des nachgeschalteten Filters (4') in Verbindung steht.

9. Wasserreinigungssystem nach Anspruch 8, wobei ein zum Verbinden mit einer externen Struktur konfigurierter Verbinder an einem oberen Ende des äußeren Gehäuses definiert ist, ein Rohwasserverbinder, ein Wasserspeicherverbinder, ein Reinwasserverbinder und ein Abwasserverbinder alle auf parallele Weise an dem Verbinder definiert sind, wobei der Rohwasserverbinder mit dem Rohwassereinlass in Verbindung steht, der Wasserspeicherverbinder mit der Wasserspeicheröffnung in Verbindung steht, der Reinwasserverbinder mit dem Reinwasserauslass in Verbindung steht und der Abwasserverbinder mit dem Abwasserauslass in Verbindung steht.

## Revendications

1. Système de purification d'eau comportant un ensemble formant filtre composite et une pompe de surpression, dans lequel
l'ensemble formant filtre composite comporte
un boîtier (1), et un filtre composite défini dans le boîtier (1), le boîtier (1) définit une entrée d'eau brute, une sortie d'eau filtrée initiale (111b), une entrée d'eau sous pression (122), une sortie d'eau pure, une sortie d'eau usée, et une pompe de surpression,
le filtre composite comporte un filtre pré-posé (2), un filtre à membrane (3), et un filtre post-posé (4), dans lequel
le filtre pré-posé (2) et le filtre à membrane (3) sont coaxiaux et sont définis d'une manière allant de l'extérieur vers l'intérieur le long d'une direction radiale, et espacés l'un par rapport à l'autre, et
le filtre post-posé (4) est raccordé au filtre à membrane (3) et situé au niveau d'une position en aval du filtre à membrane (3), dans lequel le filtre post-posé (4) est situé sur le filtre pré-posé (2) et le filtre à membrane (3) ;
la sortie d'eau filtrée initiale (111b) est en communication avec une extrémité de sortie du filtre pré-posé (2), l'entrée d'eau sous pression (122) est en communication avec une extrémité d'entrée du filtre à membrane (3), dans lequel la sortie d'eau filtrée initiale (111b) et l'entrée d'eau sous pression (122) sont toutes les deux définies au niveau d'une surface d'extrémité inférieure du boîtier (1) et dans lequel l'entrée d'eau sous pression (122) est de forme circulaire, et située au niveau d'une position centrale de la surface d'extrémité inférieure du boîtier (1), la sortie d'eau filtrée initiale (111b) et l'entrée d'eau sous pression (122) sont concentriques ; et
l'extrémité de sortie du filtre pré-posé (2) est adjacente par rapport à l'extrémité d'entrée du filtre à membrane (3), la sortie d'eau filtrée initiale (111b) est une ouverture annulaire qui entoure l'entrée d'eau sous pression (122) ; et
la pompe de surpression est située au niveau d'une position en aval du filtre pré-posé (2) et raccordée à l'entrée d'eau sous pression (122),
dans lequel le boîtier (1) comporte un boîtier extérieur (11), et un boîtier intérieur (12) reçu dans le boîtier extérieur (11), le filtre pré-posé (2) est défini entre la surface intérieure du boîtier extérieur (11) et la surface extérieure du boîtier intérieur (12), le filtre à membrane (3) est reçu dans le boîtier intérieur (12), le filtre post-posé (4) est défini au niveau d'une extrémité du haut du boîtier intérieur (12) ;
une surface d'extrémité inférieure du boîtier extérieur (11) définit une première ouverture, la périphérie de la première ouverture s'étend vers le bas pour former une première nervure annulaire (111a) ;
une surface d'extrémité inférieure du boîtier intérieur (12) définit une deuxième ouverture, une partie saillante de la deuxième ouverture le long d'une direction haut-bas est située dans la première ouverture, la périphérie de la deuxième ouverture s'étend vers le bas pour former une deuxième nervure annulaire (121), la deuxième nervure annulaire (121) s'étend jusque dans la première nervure annulaire (111a) ; et
une surface de circonférence intérieure de la première nervure annulaire (111a) et une surface circonférentielle extérieure de la deuxième nervure annulaire (121) forment de manière coopérative la sortie d'eau filtrée initiale (111b), la surface de circonférence intérieure de la deuxième nervure annulaire (121) définit l'entrée d'eau sous pression (122).

2. Système de purification d'eau selon la revendication 1, dans lequel un rayon de l'entrée d'eau sous pression (122) mesure de 10 mm à 20 mm, un rayon d'un cercle défini par le bord périphérique extérieur de la sortie d'eau filtrée initiale (111b) mesure de 25 mm à 35 mm.

3. Système de purification d'eau selon la revendication 1, dans lequel une surface circonférentielle extérieure de la première nervure annulaire (111a) et la surface circonférentielle extérieure de la deuxième nervure annulaire (121) définissent toutes les deux une structure d'étanchéité, la structure d'étanchéité est configurée sous la forme d'un adaptateur qui est étroitement raccordé à une pompe de surpression du système de purification d'eau.

4. Système de purification d'eau selon la revendication 3, dans lequel les structures d'étanchéité comportent une rainure annulaire d'étanchéité (111c) définie au niveau de la surface circonférentielle extérieure de la première nervure annulaire (111a) et un élément d'étanchéité (111d) défini dans la rainure annulaire d'étanchéité (111c), et une autre rainure annulaire d'étanchéité (111c) située au niveau de la surface circonférentielle extérieure de la deuxième nervure annulaire (121) et un autre élément d'étanchéité (111d) défini dans ladite une autre rainure annulaire d'étanchéité (111c).

5. Système de purification d'eau selon la revendication 1, dans lequel un raccord (14) configuré à des fins de raccordement à une structure externe est défini au niveau d'une extrémité supérieure du boîtier extérieur (11), un raccord d'eau brute (141), un raccord d'eau pure (142), et un raccord d'eau usée (143) sont tous définis sur le raccord (14) d'une manière parallèle, le raccord d'eau brute (141) est en communication avec l'entrée d'eau brute, le raccord d'eau pure (142) est en communication avec la sortie d'eau pure, le raccord d'eau usée (143) est en communication avec la sortie d'eau usée.

6. Système de purification d'eau selon la revendication 1, dans lequel le filtre à membrane (3) comporte un tuyau de collecte central (32), et un corps de filtre à membrane (3) enroulé autour du tuyau de collecte central (32), l'entrée d'eau sous pression (122) est en communication avec une extrémité d'entrée du corps de filtre à membrane (3), une paroi du tuyau de collecte central (32) définit une pluralité d'orifices de communication (321) qui sont en communication avec une extrémité de sortie du corps de filtre à membrane (3), une extrémité supérieure du tuyau de collecte central (32) est en communication avec une extrémité d'entrée du filtre post-posé (4).

7. Système de purification d'eau selon la revendication 6, dans lequel l'ensemble formant filtre composite comporte par ailleurs un boîtier de raccordement creux (15), au moins une partie du boîtier de raccordement (15) est définie dans une extrémité supérieure du boîtier intérieur (12), et l'extrémité supérieure du tuyau de collecte central (32) est en communication avec une cavité intérieure du boîtier de raccordement (15) ; et
une surface extérieure du boîtier de raccordement (15) et une surface intérieure du boîtier intérieur (12) définissent de manière coopérative un canal d'écoulement d'eau usée (16) servant à mener l'eau usée depuis le corps de filtre à membrane (3) jusqu'à la sortie d'eau usée ; le filtre post-posé (4) est situé dans le boîtier de raccordement (15), le filtre post-posé (4) et une surface intérieure du boîtier de raccordement (15) définissent de manière coopérative un canal d'écoulement, une cavité intérieure du filtre post-posé (4) définit un canal d'écoulement d'eau pure (17) servant à mener l'eau pure jusqu'à la sortie d'eau pure.

8. Système de purification d'eau selon la revendication 1, comportant par ailleurs un orifice de stockage d'eau, dans lequel l'orifice de stockage d'eau est en communication avec une extrémité de sortie du filtre à membrane (3') et une extrémité d'entrée du filtre post-posé (4').

9. Système de purification d'eau selon la revendication 8, dans lequel un raccord configuré à des fins de raccordement à une structure externe est défini au niveau d'une extrémité supérieure du boîtier extérieur, un raccord d'eau brute, un raccord de stockage d'eau, un raccord d'eau pure, et un raccord d'eau usée sont tous définis sur le raccord d'une manière parallèle, le raccord d'eau brute est en communication avec l'entrée d'eau brute, le raccord de stockage d'eau est en communication avec l'orifice de stockage d'eau, le raccord d'eau pure est en communication avec la sortie d'eau pure, le raccord d'eau usée est en communication avec la sortie d'eau usée.
